# EUROPÄISCHE PATENTSCHRIFT

(11) **EP 3 960 948 B1**
(45) Veröffentlichungstag und Bekanntmachung des Hinweises auf die Patenterteilung: **10.01.2024**
(21) Anmeldenummer: 21193352.8
(22) Anmeldetag: 26.08.2021
(51) Int. Cl.: E04B 1/80, F16L 59/065

(54) **TEMPERATURSTABILES VAKUUMISOLATIONSELEMENT**
THERMALLY STABLE VACUUM INSULATION ELEMENT
ÉLÉMENT D'ISOLATION SOUS VIDE STABLE EN TEMPÉRATURE

(30) Priorität: 27.08.2020 DE 202020104960 U
(43) Veröffentlichungstag der Anmeldung: 02.03.2022
(73) Patentinhaber: va-Q-tec AG, 97080 Würzburg (DE)
(72) Erfinder: Caps, Roland, 63839 Kleinwallstadt (DE); Gralla, Sebastian, 97070 Würzburg (DE); Roth, Stefan, 97276 Margetshöchheim (DE)
(74) Vertreter: Gleim, Christian Ragnar

(56) Entgegenhaltungen:
- EP-A1- 2 573 131
- EP-A2- 1 988 228
- US-A1- 2013 071 640

## Beschreibung

Die Erfindung betrifft ein temperaturstabiles Vakuumisolationselement gemäß dem Anspruch 1.

Vakuumisolationselemente sind insbesondere in der Form von Vakuumisolationspaneelen weit verbreitet.

Bei konventionellen Vakuumisolationspaneelen wird ein druckstabiles Kernmaterial, zum Beispiel aus pyrogener Kieselsäure, umhüllt. Zur Umhüllung wird meist eine metallisierte Kunststoffolie verwendet, in die das Kernmaterial eingefaltet wird. Die Umhüllung wird evakuiert, wobei das Vakuumisolationspaneelen aufgrund des darin erzeugten Vakuums im Vergleich zu anderen Isolierplattenwerkstoffen hervorragende Isoliereigenschaften zeigt. Insbesondere trägt die durch Evakuierung reduzierte Konvektion innerhalb des Vakuumisolationspaneels zu den besseren Isoliereigenschaften bei.

Derartige Vakuumisolationspaneele kommen in den unterschiedlichsten technischen Anwendungen zum Einsatz, wie zum Beispiel als Isolierelemente in Transportcontainern oder -boxen für den temperaturgeführten Transport oder im Bereich von Baumaterialien, zum Beispiel zur Isolierung von Decken und Wänden, wenn wenig Raum zur Verfügung steht.

Dabei ergeben sich Nachteile hinsichtlich der Temperaturstabilität, insofern zum Beispiel bei der Verwendung bei besonders hohen Temperaturen sich die Eigenschaften der Kunststoffolie verändern können. Bei höheren Temperaturen ist dabei zu beobachten, dass die Dichtheit der Folie abnimmt, so dass das Vakuum darin nicht mehr hinreichend gehalten wird. Bei punktuellen Temperaturbelastungen kann die Kunststoffolie auch schmelzen und zerstört werden.

Aber auch im Bereich von besonders niedrigen Temperaturen lassen sich mit dem oben beschriebenen Aufbau nur schwer in der Praxis auf Dauer einsetzbare Vakuumisolationspaneele herstellen.

Es ist zum Beispiel aus der WO 9 601 346 bekannt ein Vakuumisolationspaneel mit einer Edelstahlumhüllung zu versehen. Dabei wird ein Oberteil und ein Unterteil aus Edelstahl miteinander verschweißt, um den Zwischenraum hermetisch abzuschließen. Im Kern dieses Vakuumisolationspaneel sind mehrere Lagen aus Glasfasermatten angeordnet.

Eine ähnliche Technik offenbart die WO 2018 043 712, wobei ein Vakuumisolationspaneel mit einer Stahlumhüllung bereitgestellt wird. Auch hier besteht das Kernmaterial aus einem Fasermaterial.

Ferner ist aus dem Stand der Technik die DE 10 2004 031 967 B4, die DE 10 2010 005 800 A1 sowie die DE 10 2013 218 689 A1, US2013/071640A1, EP1988228A2, EP2573131A1 bekannt.

Der Nachteil bei den im Stand der Technik bekannten Lösungen für ein temperaturstabiles Vakuumisolationselement ist, dass die Herstellung aufwendig ist und insbesondere in Bezug auf Vakuumisolationselemente auf andere Herstellungsverfahren und Materialien zurückgegriffen werden muss.

Es ist die Aufgabe der vorliegenden Erfindung die Nachteile aus dem Stand der Technik zu beseitigen und ein temperaturstabiles Vakuumisolationselement zur Verwendung über einen weiten Temperaturbereich von hohen oder niedrigen Temperaturen bereitzustellen. Diese Aufgabe wird durch ein Vakuumisolationselement gemäß dem unabhängigen Anspruch gelöst. Vorteilhaftes Aspekte bilden den Gegenstand der jeweiligen Unteransprüche.

Die Erfindung umfasst ein temperaturstabiles Vakuumisolationselement nach Anspruch 1 zur Verwendung über einen weiten Temperaturbereich von hohen oder niedrigen Temperaturen umfassend
- ein Kernmaterial aus pyrogener Kieselsäure in einem Gewichtsanteil im Bereich von 30 % bis 90 %;
- ein Fasermaterial in einem Gewichtsanteil im Bereich von 1% bis 10%;
- ein Trübungsmittel in einem Gewichtsanteil im Bereich von 5% bis 50%; und
- eine vakuumdichten Umhüllung des Kernmaterials sowie des daran oder darin angeordneten Fasermaterials und des Trübungsmittels aus mindestens einer Edelstahlfolie.

Als Kernmaterial für Vakuumisolationselemente ist pyrogene Kieselsäure besonders geeignet, da es in Kombination mit einer vakuumdichten Umhüllung gut evakuierbar ist. Zur guten Evakuierbarkeit trägt eine mikroporöse Struktur der pyrogenen Kieselsäure bei. Indem das Kernmaterial aus pyrogener Kieselsäure und einer vakuumdichten Umhüllung des Kernmaterials aus mindestens einer Edelstahlfolie kombiniert wird, kann auf einfache Art und Weise ein temperaturstabiles Vakuumisolationselement hergestellt werden, dass über einen weiten Temperaturbereich von hohen oder niedrigen Temperaturen stabil einsetzbar ist.

Gemäß einem besonders bevorzugten Aspekt hat das Fasermaterial einen Gewichtsanteil im Bereich von 2% bis 5%.

Es ist zudem bevorzugt, wenn das Fasermaterial ein Trübungsmittel mit einem Gewichtsanteil im Bereich von 10 % bis 40 % umfasst. Durch den Gewichtsanteil des Trübungsmittels kann die Wärmeübertragung durch Infrarotstrahlung eingestellt werden.

Vorteilhafterweise ist das Fasermaterial in dem Kernmaterial.

Bevorzugt umfasst das Fasermaterial Glasfasern, wie Quarzglasfasern, E-Glasfasern oder Silikat-Fasern. Als E-Glasfaser (Electric-Glasfasern) ist beispielsweise Aluminiumborsilikat-Glasfaser geeignet.

Vorteilhafterweise haben die Fasern des Fasermaterials eine Dicke im Bereich von 2 µm bis 25 µm und eine Länge im Bereich von 2 mm bis 30 mm.

Besonders vorteilhaft ist es, wenn das Fasermaterial binderfrei ist. Das bindefreie Fasermaterial ermöglicht eine vorteilhafte Anordnung des Fasermaterials in dem Kernmaterial aus pyrogener Kieselsäure unter Erhaltung einer mikroporösen Struktur der pyrogenen Kieselsäure. Des Weiteren ermöglicht ein bindefreies Fasermaterial den Einsatz des Vakuumisolationselements über einen größeren Temperaturbereich.

Bevorzugt ist das Kernmaterial, das Fasermaterial und das Trübungsmittel binderfrei verpresst ausgebildet.

Gemäß einem weiteren bevorzugten Aspekt umfasst das Trübungsmittel Siliciumcarbid und/oder Graphitpulver und/oder Ruß und/oder Eisenoxid und/oder Titanoxid. Durch den Einsatz von Trübungsmittel kann eine Reduzierung des Wärmetransportes durch Infrarotstrahlung erreicht werden.

Vorteilhafterweise hat das Siliciumcarbid eine Korngröße im Bereich von 1 bis 10 µm, insbesondere im Bereich von 3 µm bis 5 µm.

Vorteilhafterweise hat die dünnere Edelstahlfolie eine Ausnehmung für den Kern. Die dickere Folie ist als ebene Fläche ausgebildet.

Besonders vorteilhaft ist es dabei, wenn eine Edelstahlfolie eine Dicke im Bereich von 10 µm bis 100 µm, insbesondere im Bereich von 20 µm von 75 µm, hat, und die andere Edelstahlfolie eine Dicke im Bereich von 50 µm bis 300 µm, insbesondere 75 µm bis 150 µm hat.

Vorteilhafterweise sind die Edelstahlfolien (an der Oberfläche) glatt oder geprägt.

Es ist technisch besonders bevorzugt, wenn ferner zwischen Umhüllung und Kernmaterial ein feinporöses, temperaturstabiles Filtervlies angeordnet ist.

Im Folgenden wird die Erfindung anhand von Zeichnungen näher erläutert. Gleiche Bezugszeichen beschreiben gleiche Merkmale. Es zeigen:

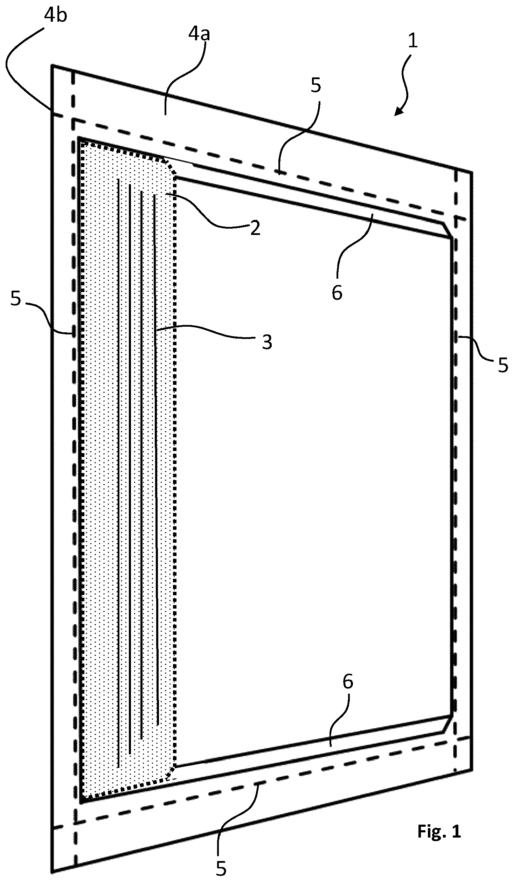

- Fig. 1: Perspektivische Ansicht auf ein erfindungsgemäßes temperaturstabiles Vakuumisolationselement.

**Fig. 1** zeigt eine perspektivische Ansicht eines erfindungsgemäßen temperaturstabiles Vakuumisolationselements 1.

Das temperaturstabiles Vakuumisolationselement 1 ist zur Verwendung über einen weiten Temperaturbereich von hohen oder niedrigen Temperaturen geeignet. Es kann insbesondere in einem Temperaturbereich von 0,1 K bis 873 K verwendet werden. Das Vakuumisolationselement 1 umfasst ein Kernmaterial 2 aus pyrogener Kieselsäure in einem Gewichtsanteil 90 %.

Die pyrogene Kieselsäure bildet eine mikroporöse Struktur. Dies gewährleistet zum einen die Stabilität der Struktur. Des Weiteren ist in Kombination mit einer vakuumdichten Umhüllung die pyrogene Kieselsäure als Kernmaterial 2 für Vakuumisolationselemente 1 besonders geeignet, da es ein gut evakuierbares System bildet.

Das Vakuumisolationselement 1 umfasst weiterhin ein Fasermaterial 3 in einem Gewichtsanteil 5% und ein Trübungsmittel in einem Gewichtsanteil im Bereich von 5%. Durch den Einsatz von Trübungsmittel, wie Siliciumcarbid, kann eine Reduzierung des Wärmetransportes durch Infrarotstrahlung erreicht werden.

Das in diesem Beispiel gezeigte Fasermaterial 3 ist bindefrei und umfasst Glasfasern. Das bindefreie Fasermaterial 3 ermöglicht eine vorteilhafte Anordnung des Fasermaterials 3 in dem Kernmaterial 2 aus pyrogener Kieselsäure unter Erhaltung einer mikroporösen Struktur der pyrogenen Kieselsäure. Des Weiteren ermöglicht ein bindefreies Fasermaterial 3 den Einsatz des Vakuumisolationselements 1 über einen größeren Temperaturbereich.

Die vakuumdichte Umhüllung des Kernmaterials 2 besteht aus zwei Edelstahlfolien 4a, 4b, die mittels Widerstandsschweißen an den Schweißnähten 5 verbunden sind. Insbesondere durch die Kombination aus pyrogener Kieselsäure als Kernmaterial 2 und einer vakuumdichten Umhüllung des Kernmaterials 2 aus zwei Edelstahlfolien 4a, 4b kann ein temperaturstabiles Vakuumisolationselement 1 zur Verwendung über einen weiten Temperaturbereich von hohen oder niedrigen Temperaturen bereitgestellt werden.

Die in diesem Beispiel gezeigten zwei, an der Oberfläche glatt ausgebildeten, Edelstahlfolien 4a, 4b sind unterschiedlich dick, um eine gute Formgebung der Umhüllung zu gewährleisten. Beispielsweise hat die Edelstahlfolie 4a eine Dicke von 50 µm, und die andere Edelstahlfolie 4b hat eine Dicke von 150 µm. Beispielsweise wurde für die Formgebung des gezeigten Vakuumisolationselements 1 eine der beiden Edelstahlfolien 4a tiefgezogen, um Stege 6, welche um einen Winkel von 20° geneigt sind, aufweisen.

## Patentansprüche

1. Temperaturstabiles Vakuumisolationselement (1) zur Verwendung über einen weiten Temperaturbereich von hohen oder niedrigen Temperaturen umfassend
- ein Kernmaterial (2) aus pyrogener Kieselsäure in einem Gewichtsanteil im Bereich von 30 % bis 90 %;
- ein Fasermaterial (3) in einem Gewichtsanteil im Bereich von 1 % bis 10 %;
- ein Trübungsmittel in einem Gewichtsanteil im Bereich von 5 % bis 50 %; und
- eine vakuumdichten Umhüllung des Kernmaterials (2) aus mindestens zwei Edelstahlfolien (4a, 4b), die mittels Schweißen verbunden sind.

2. Vakuumisolationselement (1) gemäß Anspruch 1, wobei das Fasermaterial (3) einen Gewichtsanteil im Bereich von 2 % bis 5 % hat.

3. Vakuumisolationselement (1) gemäß Anspruch 1 oder 2, wobei das Trübungsmittel einen Gewichtsanteil im Bereich von 10 % bis 40 % hat.

4. Vakuumisolationselement (1) gemäß einem der vorangehenden Ansprüche, wobei das Fasermaterial (3) in dem Kernmaterial (3) ist.

5. Vakuumisolationselement (1) gemäß einem der vorangehenden Ansprüche, wobei das Fasermaterial (3) Glasfasern, Quarzglasfasern, E-Glasfasern oder Silikat-Fasern, insbesondere mit einer Dicke im Bereich von 2 µm bis 25 µm und einer Länge im Bereich von 2 mm bis 30 mm umfasst.

6. Vakuumisolationselement (1) gemäß einem der vorangehenden Ansprüche, wobei das Kernmaterial (2), das Fasermaterial (3) und das Trübungsmittel binderfrei verpresst ausgebildet ist.

7. Vakuumisolationselement (1) gemäß einem der vorangehenden Ansprüche, wobei das Trübungsmittel Siliciumcarbid und/oder Graphitpulver und/oder Ruß und/oder Eisenoxid und/oder Titanoxid umfasst.

8. Vakuumisolationselement (1) gemäß Anspruch 7, wobei das Siliciumcarbid eine Korngröße im Bereich von 1 bis 10 µm, insbesondere im Bereich von 3 µm bis 5 µm, hat.

9. Vakuumisolationselement (1) gemäß einem der vorangehenden Ansprüche, wobei die Umhüllung zwei verschieden dicke Edelstahlfolien (4a, 4b) umfasst.

10. Vakuumisolationselement (1) gemäß Anspruch 9, wobei die dünnere Edelstahlfolien (4a) eine Ausnehmung für den Kern umfasst, und wobei die dickere Folie als ebene Fläche ausgebildet ist.

11. Vakuumisolationselement (1) gemäß Anspruch 9 oder 10, wobei eine Edelstahlfolie (4a) eine Dicke im Bereich von 10 µm bis 100 µm, insbesondere im Bereich von 20 µm von 75 µm, umfaßt, und wobei die andere Edelstahlfolie (4b) eine Dicke im Bereich von 50 µm bis 300 µm, insbesondere 75 µm bis 150 µm, umfaßt.

12. Vakuumisolationselement (1) gemäß einem der vorangehenden Ansprüche, wobei die Edelstahlfolien (4a, 4b) glatt oder geprägt ausgebildet sind.

13. Vakuumisolationselement (1) gemäß einem der vorangehenden Ansprüche, ferner umfassend ein zwischen Umhüllung und Kernmaterial (2) angeordnetes, feinporöses, temperaturstabiles Filtervlies.

## Claims

1. Temperature-stable vacuum insulation element (1) for use over a wide temperature range of high or low temperatures comprising:
- a core material (2) of fumed silica in a proportion by weight in the range from 30% to 90%;
- a fiber material (3) in a proportion by weight in the range from 1% to 10%;
- an opacifying agent in a proportion by weight in the range from 5% to 50%; and
- a vacuum-tight cladding of the core material (2) consisting of at least two stainless steel foils (4a, 4b) which are joined by welding.

2. Vacuum insulation element (1) according to claim 1, wherein the fiber material (3) has a proportion by weight in the range from 2% to 5%.

3. Vacuum insulation element (1) according to claim 1 or 2, wherein the opacifying agent has a proportion by weight in the range from 10 % to 40 %.

4. Vacuum insulation element (1) according to one of the preceding claims, wherein the fiber material (3) is included in the core material (3).

5. Vacuum insulation element (1) according to one of the preceding claims, wherein the fiber material (3) comprises glass fibers, quartz glass fibers, E-glass fibers or silicate fibers, in particular with a thickness in the range from 2 µm to 25 µm and a length in the range from 2 mm to 30 mm.

6. Vacuum insulation element (1) according to one of the preceding claims, wherein the core material (2), the fiber material (3) and the opacifying agent are formed in a binder-free pressed manner.

7. Vacuum insulation element (1) according to one of the preceding claims, wherein the opacifying agent comprises silicon carbide and/or graphite powder and/or carbon black and/or iron oxide and/or titanium oxide.

8. Vacuum insulation element (1) according to claim 7, wherein the silicon carbide has a grain size in the range from 1 µm to 10 µm, in particular in the range from 3 µm to 5 µm.

9. Vacuum insulation element (1) according to one of the preceding claims, wherein the cladding comprises two stainless steel foils (4a, 4b) of different thickness.

10. Vacuum insulation element (1) according to claim 9, wherein the thinner stainless steel foil (4a) comprises a recess for the core, and wherein the thicker foil is designed as a flat surface.

11. Vacuum insulation element (1) according to claim 9 or 10, wherein a stainless steel foil (4a) has a thickness in the range from 10 µm to 100 µm, in particular in the range from 20 µm to 75 µm, and wherein the other stainless steel foil (4b) has a thickness in the range from 50 µm to 300 µm, in particular 75 µm to 150 µm.

12. Vacuum insulation element (1) according to one of the preceding claims, wherein the stainless steel foils (4a, 4b) are smooth or embossed.

13. Vacuum insulation element (1) according to one of the preceding claims, further comprising a finely porous, temperature-stable filter fleece disposed between the cladding and the core material (2).

## Revendications

1. Elément d'isolation sous vide (1) stable en température, utilisable dans une large gamme de températures hautes ou basses, comprenant :
- un matériau noyau (2) en silice pyrogénée dans une proportion en poids comprise entre 30 % et 90 % ;
- un matériau fibreux (3) dans une proportion en poids comprise entre 1 % et 10 % ;
- un agent opacifiant dans une proportion en poids comprise entre 5 % et 50 % ; et
- un revêtement étanche au vide du matériau noyau (2) constitué d'au moins deux feuilles d'acier inoxydable (4a, 4b) reliées par soudage.

2. Elément d'isolation sous vide (1) selon la revendication 1, dans lequel le matériau fibreux (3) a une proportion en poids comprise entre 2 % et 5 %.

3. Elément d'isolation sous vide (1) selon les revendications 1 ou 2, dans lequel l'agent opacifiant a une proportion en poids comprise entre 10 % et 40 %.

4. Elément d'isolation sous vide (1) selon l'une des revendications précédentes, dans lequel le matériau fibreux (3) est compris dans le matériau noyau (3).

5. Elément d'isolation sous vide (1) selon l'une des revendications précédentes, dans lequel le matériau fibreux (3) comprend des fibres de verre, des fibres de verre de quartz, des fibres de verre E ou des fibres de silicate, en particulier d'une épaisseur comprise entre 2 µm et 25 µm et d'une longueur comprise entre 2 mm et 30 mm.

6. Elément d'isolation sous vide (1) selon l'une des revendications précédentes, dans lequel le matériau de noyau (2), le matériau fibreux (3) et l'agent opacifiant sont formés par pressage sans liant.

7. Elément d'isolation sous vide (1) selon l'une des revendications précédentes, dans lequel l'agent opacifiant comprend du carbure de silicium et/ou de la poudre de graphite et/ou du noir de carbone et/ou de l'oxyde de fer et/ou de l'oxyde de titane.

8. Elément d'isolation sous vide (1) selon la revendication 7, dans lequel le carbure de silicium a une taille de grain comprise entre 1 µm et 10 µm, en particulier entre 3 µm et 5 µm.

9. Elément d'isolation sous vide (1) selon l'une des revendications précédentes, dans lequel le revêtement comprend deux feuilles d'acier inoxydable (4a, 4b) d'épaisseur différente.

10. Elément d'isolation sous vide (1) selon la revendication 9, dans lequel la feuille d'acier inoxydable (4a) la plus mince comprend une cavité pour le noyau, et dans lequel la feuille la plus épaisse est conçue comme une surface plane.

11. Elément d'isolation sous vide (1) selon la revendication 9 ou 10, dans lequel une feuille d'acier inoxydable (4a) a une épaisseur comprise entre 10 µm et 100 µm, en particulier entre 20 µm et 75 µm, et dans lequel l'autre feuille d'acier inoxydable (4b) a une épaisseur comprise entre 50 µm et 300 µm, en particulier entre 75 µm et 150 µm.

12. Elément d'isolation sous vide (1) selon l'une des revendications précédentes, dans lequel les feuilles d'acier inoxydable (4a, 4b) sont lisses ou gaufrées.

13. Elément d'isolation sous vide (1) selon l'une des revendications précédentes, comprenant en outre un voile filtrant finement poreux, stable en température, disposé entre le revêtement et le matériau noyau (2).
